# EUROPÄISCHE PATENTSCHRIFT

(11) **EP 0 616 134 B1**
(45) Veröffentlichungstag und Bekanntmachung des Hinweises auf die Patenterteilung: **14.01.1998**
(21) Anmeldenummer: 94103016.5
(22) Anmeldetag: 01.03.1994
(51) Int. Cl.: F16B 7/04, A47B 96/14, F16B 12/50, F16B 7/18

(54) **Verbindungseinrichtung für Profilteile**
Connecting arrangement for profiles
Dispositif de raccordement pour éléments profilés

(30) Priorität: 19.03.1993 DE 9304054
(43) Veröffentlichungstag der Anmeldung: 21.09.1994
(73) Patentinhaber: FESTO AG & Co, 73734 Esslingen (DE)
(72) Erfinder: Stoll, Kurt, Dipl.-Ing., D-73732 Esslingen (DE)
(74) Vertreter: Abel, Martin, Dipl.-Ing.

(56) Entgegenhaltungen:
- EP-A- 0 496 107
- DE-A- 4 039 421
- DE-C- 4 137 079
- DE-U- 8 704 548
- DE-U- 9 200 645
- FR-A- 2 685 403

## Beschreibung

Die Erfindung betrifft eine Verbindungseinrichtung für Profilteile, die zum Aufbau von Konstruktionen wie Tische, Regale, Gestelle oder dergleichen verwendbar sind, zur Verbindung eines ersten Profilteils mit einem quer zu diesem verlaufenden, sich mit einer Stirnseite gegen eine Längsseite des ersten Profilteils abstützenden zweiten Profilteil, wobei das erste Profilteil an der dem zweiten Profilteil zugewandten Längsseite eine sich in Längsrichtung erstreckende erste Verankerungsnut aufweist, deren schlitzartige seitliche Längsöffnung von der Längsachse einer an dem zweiten Profilteil vorgesehenen und an der dem ersten Profilteil zugewandten Stirnseite offenen zweiten Verankerungsnut getroffen wird.

Unter Verwendung von stangenähnlichen Profilteilen aufgebaute Konstruktionen verfügen häufig über Verbindungsstellen, an denen ein Profilteil stirnseitig stumpf an die Längsseite eines anderen Profilteils angesetzt ist, so daß die beiden Profilteile im rechten Winkel zueinander verlaufen. Die Verbindung der beiden Profilteile an der Verbindungsstelle erfolgt meist durch unmittelbares Verschrauben, indem zunächst an der erforderlichen Stelle Verbindungsbohrungen gesetzt, anschließend Gewinde geschnitten und zuletzt die notwendigen Verbindungsschrauben eingeschraubt werden. Die Herstellung einer derartigen Verbindung ist sehr aufwendig, nicht universell, benötigt besondere Werkzeuge und verursacht Späne.

Im Rahmen des deutschen Gebrauchsmusters DE-U-9200 645 wurde daher bereits eine Verbindungseinrichtung der eingangs genannten Art vorgeschlagen, die eine spanlose Verbindung gestattet. Man verwendet Winkelelemente, die unter Verwendung von Klemmschrauben und Nutensteinen gleichzeitig in Verankerungsnuten beider Profilteile festgelegt werden. Trotz der unbestritten vorhandenen Vorteile ist eine derartige Verbindungseinrichtung weiterhin recht umständlich zu handhaben. Dazuhin findet kaum eine Verspannung der beiden Profilteile in Längsrichtung des stumpf anstoßenden Profilteils statt, was sich nachteilig auf die Stabilität auswirken kann.

Es ist die Aufgabe der vorliegenden Erfindung, eine Verbindungseinrichtung der eingangs genannten Art zu schaffen, die bei einfacher Handhabung eine zuverlässige feste Verbindung zweier quer zueinander verlaufender Profilteile ermöglicht.

Zur Lösung dieser Aufgabe ist vorgesehen, daß die Verbindungseinrichtung ein erstes Verbindungsteil aufweist, das unter Einnahme einer Verankerungsstellung so in der ersten Verankerungsnut angeordnet werden kann, daß eine durch die Längsöffnung hindurch erfolgende Entnahme aus der ersten Verankerungsnut unmöglich ist, daß die Verbindungseinrichtung ein in der zweiten Verankerungsnut anzuordnendes zweites Verbindungsteil aufweist, und daß die Verbindungseinrichtung ein Spannteil aufweist, mit dem sich die beiden Verbindungsteile im wesentlichen in Richtung der Längsachse der zweiten Verankerungsnut aufeinander zu gerichtet miteinander verspannen lassen, wobei das zweite Verbindungsteil bei entsprechender Verspannung durch das Spannteil in der zweiten Verankerungsnut verkantet und in der dann vorliegenden Verkantungsstellung in Längsrichtung der zweiten Verankerungsnut unverrückbar am zweiten Profilteil festgelegt.

Auf diese Weise lassen sich quer zueinander verlaufende Profilteile spanlos fest miteinander verbinden, wobei das zweite Profilteil zudem fest gegen die Längsseite des ersten Profilteils gespannt wird, so daß sich ein äußerst stabiler Zusammenhalt einstellt. Da an den Profilteilen keine Manipulationen vorzunehmen sind, können sie nach dem Lösen der Verbindung jederzeit anderweitig wiederverwendet werden. Beim Herstellen und Lösen der Verbindung treten keinerlei Späne auf, da es sich erübrigt, Bohrungen einzubringen. Die Abstützung am ersten Profilteil erfolgt über das erste Verbindungsteil, das in der Verankerungsstellung regelmäßig gegen eine Abstützfläche der ersten Verankerungsnut arbeitet, so daß es an einer durch die Längsöffnung hindurch erfolgenden Entnahme aus der ersten Verankerungsnut gehindert ist und eine Spannkraft auf das erste Profilteil ausüben kann. Das zweite Verbindungsteil sitzt in der zweiten Verankerungsnut und läßt sich mit Hilfe eines Spannteils in Richtung des ebenfalls von dem Spannteil beaufschlagten ersten Verbindungsteil beaufschlagen. Diese Beaufschlagung bewirkt, daß sich das zweite Verbindungsteil in der zweiten Verankerungsnut verkantet und auf diese Weise bezüglich dem zweiten frofilteil in Längsrichtung dessen zweiter Verankerungsnut unverrrückbar festgelegt wird. In der Folge sind also beide Verbindungsteile bezüglich ihres jeweils zugeordneten Profilteils in Längsrichtung der zweiten Verankerungsnut unbeweglich fixiert, so daß die von den Spannteilen hervorgerufene Spannkraft zwischen den beiden Profilteilen wirkt und diese fest zusammenhält.

Vorteilhafte Weiterbildungen der Erfindung sind in den Unteransprüchen aufgeführt.

Als Spannteil ist zweckmäßigerweise ein Gewindeteil vorgesehen, das mit mindestens einem der beiden Verbindungsteile in Schraubverbindung steht, und das insbesondere als Schraube ausgebildet ist.

An dem verkantbaren zweiten Verbindungsteil befindet sich zweckmäßigerweise eine Durchgangsöffnung, durch die das Spannteil hindurchgreift. Die Durchmesser der Durchgangsöffnung und des Spannteils sind hierbei zweckmäßigerweise so aufeinander abgestimmt, daß sich das zweite Verbindungsteil bezüglich dem Spannteil um eine quer zu dessen Längsachse verlaufende Achse begrenzt verkippen läßt. In der einen Kippstellung nimmt dann das zweite Verbindungsteil zweckmäßigerweise eine Lösestellung ein, in der es sich innerhalb der zweiten Verankerungsnut axial verlagern läßt. Erst beim Anziehen des Spannteils erfolgt ein Verkippen in die Verkantungsstellung. Die Handhabung und Positionierung des zweiten Verbindungsteils in der zugeordneten zweiten Verankerungsnut gestaltet sich auf diese Weise sehr einfach.

Zwischen den beiden Verbindungsteilen befindet sich zweckmäßigerweise noch ein Verdrehsicherungsteil, das gleichzeitig in die Nuthälse beider Verankerungsnuten eingreift und verhindert, daß das zweite Profilteil um eine parallel zur Längsachse ihrer zweiten Verankerungsnut verlaufende Achse bezüglich dem ersten Profilteil verdreht werden kann.

Nachfolgend wird die Erfindung anhand der beiliegenden Zeichnung näher erläutert. In dieser zeigen:
- Figur 1: eine bevorzugte Bauform der Verbindungseinrichtung in Gebrauchsstellung, mit Blickrichtung längs des ersten Profilteils, wobei von dem zweiten Profilteil nur der der Verbindungsstelle zugeordnete Endabschnitt gezeigt ist,
- Figur 2: die Anordnung aus Figur 1 im Längsschnitt gemäß Schnittlinie II-II aus Figur 1,
- Figur 3: die Anordnung aus Figur 1 mit Blickrichtung gemäß Pfeil III längs des zweiten Profilteils in Richtung zum ersten Profilteil,
- Figur 4: die bei der Anordnung gemäß Figuren 1 bis 3 verwendete Verbindungseinrichtung in explosionsartiger Einzeldarstellung,
- Figur 5: eine Seitenansicht des gemäß Figuren 1 bis 4 vorgesehenen zweiten Verbindungsteils und
- Figur 6: eine weitere Bauform des zweiten Verbindungsteils in einer der Figur 5 entsprechenden Seitenansicht.

In der Zeichnung erkennt man zwei stangenförmige Profilteile 1, 2 mit linearer Erstreckung, die zweckmäßigerweise als Strangpreßteile ausgebildet sind und insbesondere aus Aluminiummaterial bestehen. Es handelt sich um Profilteile gleicher Art mit einem beim Ausführungsbeispiel quadratischen Rechteckquerschnitt. In jeder der sich so ergebenden längsseitigen Außenflächen ist mindestens eine Verankerungsnut 3, 4 ausgebildet, die sich über die gesamte Länge des jeweiligen Profilteils 1, 2 erstreckt und zu beiden Stirnseiten hin offen ist. Über eine schlitzartige Längsöffnung 5, 6 öffnet sich eine jeweilige Verankerungsnut 3, 4 zudem zur jeweils zugeordneten Profilteil-Außenfläche.

Die Verankerungsnuten 3, 4 der beispielsgemäßen Profilteile 1, 2 verfügen untereinander zweckmäßigerweise über den gleichen Querschnitt. Sie verfügen über einen sich an die zugeordnete Außenfläche anschließenden Nuthals 7, der einerseits die zugeordnete Längsöffnung 5, 6 bildet und andererseits, in Tiefenrichtung der Verankerungsnut 3, 4 in einen breiteren Verankerungsabschnitt 8 übergeht. Somit ergibt sich eine Art T-Nut, wobei die seitlich neben dem Nuthals 7 liegenden und dem Nutgrund zugewandten Flächenabschnitte des Verankerungsabschnittes 8 Abstützflächen 12 bilden, die sich über die gesamte Nutlänge erstrecken.

Die beiden zu verbindenden Profilteile 1, 2 sind beispielsgemäß im rechten Winkel zueinander ausgerichtet, wobei das zweite Profilteil 2 mit einer Stirnseite 13 an eine Längsseite 14 des ersten Profilteils 1 angestoßen ist, die von einer der vier längsverlaufenden Außenflächen des ersten Profilteils 1 gebildet ist. Die Ausrichtung ist dabei so getroffen, daß die der besagten Längsseite 14 zugeordnete erste Verankerungsnut 3 des ersten Profilteils 1 in einer gemeinsamen Ebene mit einer zweiten Verankerungsnut 4 des zweiten Profilteils 2 verläuft. Oder mit anderen Worten, die Längsachse 16 der zweiten Verankerungsnut 4 trifft die schlitzartige Längsöffnung 5 der ersten Verankerungsnut 3 des ersten Profilteils 1. Die Nuthälse 7 beider Verankerungsnuten 3, 4 gehen somit, da beispielsgemäß kein weiteres Zwischenteil vorgesehen ist, unmittelbar ineinander über.

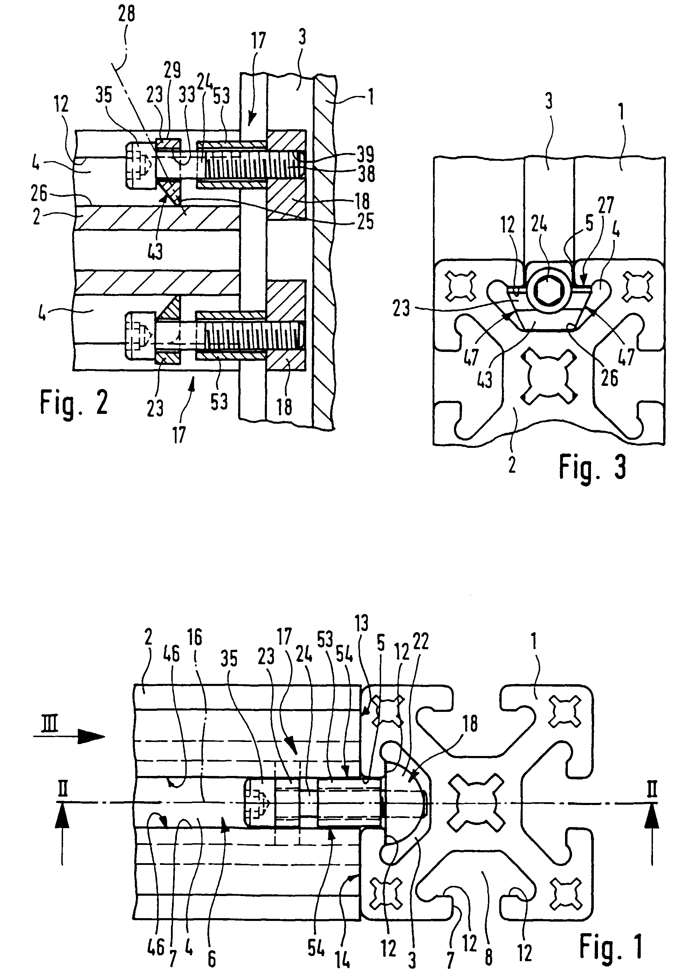

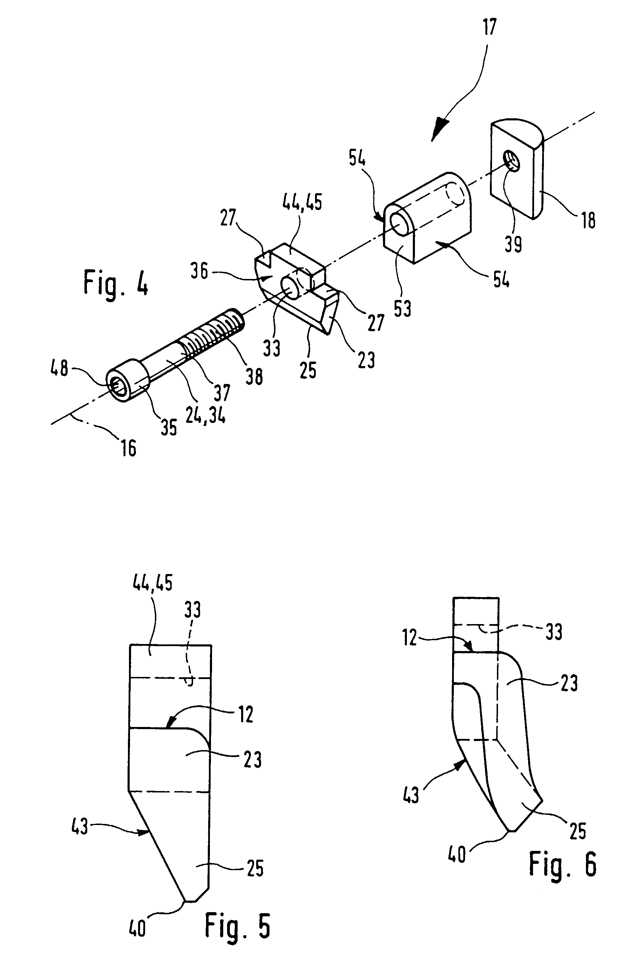

Die beiden Profilteile 1, 2 sind in der gezeigten Ausrichtung einander gegenüber fixiert und in Längsrichtung 16 zusammengespannt, wobei die Stirnseite 13 des zweiten Profilteils 2 gegen die Längsseite 14 des ersten Profilteils 1 angepreßt wird. Ursache für eine derartige Verbindung ist die vorhandene Verbindungseinrichtung 17, die in Figur 4 in Einzeldarstellung gezeigt ist. Es können jeweils mehrere derartige Verbindungseinrichtungen 17 an einer Verbindungsstelle zwischen zwei Profilteilen 1, 2 zum Einsatz kommen, und zwar vorzugsweise zwei Stück, wie dies beim Ausführungsbeispiel gezeigt ist. Hier verfügt das zweite Profilteil 2 über zwei zweite Verankerungsnuten 4 an einander entgegengesetzten Längsseiten, die beide auf die gleiche erste Verankerungsnut 3 des ersten Profilteils 1 zulaufen und denen jeweils eine Verbindungseinrichtung 17 zugeordnet ist. Die entsprechende Zweifachanordnung ist der Figur 2 zu entnehmen, sie gewährleistet eine optimale Abstützung gegen angreifende Biegemomente. Gleichwohl ist für die Verbindung zweier Profilteile 1, 2 eine einzige Verbindungseinrichtung durchaus ausreichend.

Zu dieser Verbindungseinrichtung 17 gehört zunächst ein erstes Verbindungsteil 18, das beispielsgemäß von einem Nutenstein gebildet ist, und das in Gebrauchsstellung in der ersten Verankerungsnut 3 des ersten Profilteils 1 angeordnet ist. Dabei kommt eine Befestigungspartie 22 in dem Verankerungsabschnitt 8 zu liegen und kann sich an den beidseits des Nuthalses 7 vorgesehenen Abstützflächen 12 quer zur Nutlängsrichtung am ersten Profilteil 1 abstützen, so daß eine durch die zugeordnete Längsöffnung 5 hindurch erfolgende Entnahme aus der ersten Verankerungsnut 3 unmöglich ist. Diese Verankerungsstellung ist besonders gut aus Figur 1 ersichtlich.

Das Einbringen des ersten Verankerungsteils 18 erfolgt entweder nutstirnseitig, oder aber durch die Längsöffnung 5 hindurch, indem es über den Nuthals 7 in den Verankerungsabschnitt 8 eingeschwenkt wird.

Ein zweites Verbindungsteil 23 befindet sich in Gebrauchsstellung in der zweiten Verankerungsnut 4 des zweiten Profilteils 2.

Letztlich umfaßt die Verbindungseinrichtung 17 noch ein Spannteil 24, das in Gebrauchsstellung gleichzeitig mit beiden Verbindungsteilen 18, 23 zusammenarbeitet. Mit ihm es möglich, die beiden Verbindungsteile 18, 23 aufeinander zu gerichtet zusammenzuspannen, wobei die Spannrichtung zumindest im wesentlichen mit der Längsrichtung 16 der zweiten Verankerungsnut 4 zusammenfällt.

Durch das Zusammenspannen werden gleichzeitig auch die beiden Profilteile 1, 2 in Längsrichtung des zweiten Profilteils 2 fest gegeneinander gepreßt. Die Kraftübertragung erfolgt seitens des ersten Profilteils 1 durch die Abstützung der Befestigungspartie 22 an den profilteilseitigen Abstützflächen 12. Die Kraftübertragung zwischen dem zweiten Verbindungsteil 23 und dem zweiten Profilteil 2 wird durch eine besondere Konstruktion gewährleistet, die nachstehend erläutert wird.

Bei ungespannter Verbindungseinrichtung 17 läßt sich das zweite Verbindungsteil 23 in Längsrichtung 16 in der zweiten Verankerungsnut 4 bewegen und an gewünschter Stelle positionieren. Wird anschließend das Spannteil 24 im Spannsinne betätigt, so verkantet das zweite Verbindungsteil 23 in der zugeordneten Verankerungsnut 4, wobei es in der dann vorliegenden Verkantungsstellung relativ zum zweiten Profilteil 2 in Längsrichtung 16 unbeweglich festgelegt ist.

Das zweite Verbindungsteil 23 hat vorzugsweise eine plättchenähnliche Gestalt. Es verfügt beim Ausführungsbeispiel über eine auch aus Figuren 5 und 6 ersichtliche Verkantungspartie 25, die dem Nutgrund zugewandt ist und in der Verkantungsstellung mit einem der Längsöffnung 6 zugewandten Flächenabschnitt 26 zusammenarbeitet, der zum Nutgrund und/oder zu den Nutflanken im Verankerungsabschnitt 8 gehören kann. An der entgegengesetzten, der zugeordneten Längsöffnung 6 zugewandten Oberseite des zweiten Verbindungsteils 23 befinden sich zwei Abstützpartien 27, die jeweils einer der Abstützflächen 12 der zweiten Verankerungsnut 4 zugewandt sind.

In der Lösestellung, bei ungespannter Verbindungseinrichtung 17, läßt sich das zweite Verbindungsteil 23 um eine Achse verkippen, die rechtwinkelig zu der von den beiden Verankerungsnuten 3, 4 aufgespannten Ebene verläuft. In der Lösestellung nimmt das zweite Verbindungsteil 23 eine in Figur 2 strichpunktiert bei 28 übertrieben dargestellte Schräglage bezüglich der zugeordneten zweiten Verankerungsnut 4 ein, die sich durch Aufrichten des zweiten Verbindungsteils 23 soweit verringern läßt, bis die in Figur 2 in durchgezogenen Linien gezeigte Verkantungsstellung 29 vorliegt.

Das Überführen aus der Lösestellung mit größerer Schräglage in die Verkantungsstellung erfolgt mittels des Spannteils 24, das so am zweiten Verbindungsteil 23 angreift, daß sich die erläuterte Kipp- oder Aufrichtbewegung beim Anziehen selbsttätig einstellt.

Verwirklicht ist dies beim Ausführungsbeispiel dadurch, daß das zweite Verbindungsteil 23 eine Durchgangsöffnung 33 aufweist, die sich in der Verkantungsstellung im wesentlichen in Längsrichtung 16 erstreckt. Sie ist von dem Spannteil 24 durchsetzt, das beispielsgemäß von einer Schraube 34 gebildet ist. Der Schraubenkopf 35 beaufschlagt die dem ersten Verbindungsteil 18 abgewandte Beaufschlagungsseite 36 des zweiten Verbindungsteils 23. Der hindurchgeführte Schraubenschaft 37 erstreckt sich in der Ebene der zweiten Verankerungsnut 4 in Richtung der ersten Verankerungsnut 3, wo er mit einem Gewindeabschnitt 38 in ein bevorzugt als Innengewinde ausgebildetes Gewinde 39 des ersten Verbindungsteils 18 eingeschraubt ist. Der Schraubenschaft 37 ist mit Radialspiel in der Durchgangsöffnung 33 aufgenommen, das so groß gewählt ist, daß das zweite Verbindungsteil 23 auch bei hindurchgestecktem Spannteil 24 in der Lage ist, zwischen der Lösestellung und der Verkantungsstellung zu verschwenken.

In Bezug auf den Schwerpunkt des zweiten Verbindungsteils 23 ist die Durchgangsöffnung 33 insbesondere so angeordnet, daß das zweite Verbindungsteil stets dazu tendiert, mit der unten liegenden Verkantungspartie 25 gegen den oben erwähnten Flächenabschnitt 26 der zweiten Verankerungsnut 4 anzuliegen. Wird anschließend das Spannteil 24 in das erste Verbindungsteil 18 eingeschraubt, so ändert sich die Position des Kontaktbereiches zwischen der Verkantungspartie 25 und dem erwähnten Flächenabschnitt 26 insbesondere reibungsbedingt nicht oder nur unwesentlich. Bei weiterem Anziehen des Spannteils 24 richtet sich das zweite Verbindungsteil 23 soweit auf, bis seine Abstützpartien 27 an den zugeordneten Abstützflächen 12 anliegen. Auf diese Weise ist das zweite Verbindungsteil 23 in der zweiten Verankerungsnut 4 verkantet und arretiert. Bei weiterer Erhöhung der Spannkraft kann zusätzlich zu der sich einstellenden Pressung zwischen dem zweiten Verbindungsteil 23 und dem zweiten Profilteil 2 der Effekt eintreten, daß sich insbesondere die Verkantungspartie; 25 in den zugeordneten Flächenabschnitt 26 des Verankerungsabschnittes 8 eindrückt. Auf diese Weise wird eine Art zusätzlicher Formschlußverbindung hergestellt, die eine hochfeste Verbindung gewährleistet.

Um das Eindrücken bewußt hervorzurufen, empfiehlt es sich, die Verkantungspartie 25 mit einer geeigneten Kante 40 zu versehen, die besonderes gut aus Figuren 5 und 6 hervorgeht.

Insbesondere um dem zweiten Verbindungsteil 23 in der Lösestellung die erforderliche Schräglage bezüglich der Verkantungsstellung zu ermöglichen, ist es von Vorteil, wenn die Verkantungspartie sich zu ihrem freien Ende hin verjüngt, was wiederum aus Figuren 5 und 6, aber auch aus Figur 2 hervorgeht. Die Verjüngung sollte so ausgestaltet sein, daß auf der vom ersten Verbindungsteil 18 abgewandten Seite des zweiten Verbindungsteils 23 eine Schrägfläche 43 vorliegt, die sich ausgehend von dem dem Flächenabschnitt 26 zugeordneten Bereich in Richtung zum Angriffspunkt des Spannteils 24 vom ersten Verbindungsteil 18 entfernt.

Es ist von Vorteil, wenn das zweite Verbindungsteil 23 so ausgebildet ist, daß es sich über die Längsöffnung 6 der zweiten Verankerungsnut 4 in diese einsetzen läßt.

Die beiden Abstützpartien 27 sind vorzugsweise von Schulterpartien des zweiten Verbindungsteils 23 gebildet, zwischen denen sich ein Vorsprung 45 erhebt, der zumindest in der Verkantungsstellung ausgehend vom Verankerungsabschnitt 8 in den Nuthals 7 hineinragt. Er bildet beim Ausführungsbeispiel eine Stabilisierungspartie 44, die mit den einander zugewandten Seitenflächen 46 des Nuthalses 7 zusammenarbeiten und die Querposition des zweiten Verbindungsteils 23 bezüglich dem zweiten Profilteil 2 vorgeben. Die Durchgangsöffnung 33 ist vorzugsweise zumindest teilweise in dem Vorsprung 45 ausgebildet.

Es ist zweckmäßig, wenn die innerhalb des Verankerungsabschnittes 8 angeordneten Seitenflächen 47 des zweiten Verbindungsteils 23 ebenfalls einen Schrägverlauf haben und in Tiefenrichtung der zugeordneten zweiten Verankerungsnut 4 aufeinander zulaufen.

Die Verbindungseinrichtung 17 des Ausführungsbeispiels weist ferner den besonderen Vorteil auf, daß sie in Gebrauchsstellung vollständig in den zugeordneten ersten und zweiten Verankerungsnuten 3, 4 versenkt ist. Überstehende Teile sind dadurch vermieden. Um dennoch eine gute Zugänglichkeit des Spannteils 24 für ein geeignetes Spannwerkzeug zu gewährleisten, empfiehlt es sich, an der dem Schraubenschaft 37 entgegengesetzten Stirnseite des Schraubenkopfes 35 eine als Innenmehrkant ausgebildete Werkzeugangriffspartie 48 vorzusehen, die mit einem schräg durch den Nuthals 7 eingeführten Schraubwerkzeug gut erreichbar ist.

Um die Relativposition der miteinander zu verbindenden Profilteile 1, 2 rechtwinkelig zu der von den beiden Verankerungsnuten 3, 4 aufgespannten Ebene optimal zu fixieren, empfiehlt sich die Verwendung eines Zentrierteils 53, das zwischen den beiden Verbindungsteilen 18, 23 angeordnet ist und gleichzeitig in die Nuthälse 7 der beiden sich treffenden ersten und zweiten Verankerungsnuten 3, 4 eingreift. Es handelt sich insbesondere um ein Hülsenteil, das von dem Spannteil 24 durchsetzt wird. Die Zentrierwirkung beruht darauf, daß voneinander abgewandte Seitenflächen 54 des Zentrierteils 53 den Nuthals-Seitenflächen 46 möglichst spielarm gegenüberliegen. Bevorzugt handelt es sich bei den beiden Seitenflächen 54 um ebene Flächen, so daß sich gleichzeitig eine Verdrehsicherung ergibt und das Zentrierteil 53 als Verdrehsicherungsteil fungiert, das eine relative Verdrehung zwischen den beiden Profilteilen 1, 2 auch beim Vorhandensein lediglich einer Verbindungseinrichtung 17 verhindert.

Die Arbeitsweise des in Figur 6 gezeigten zweiten Verbindungsteils 23 unterscheidet sich nicht von dem in Figuren 1 bis 5 gezeigten. Lediglich die Form wurde optimiert, so daß es sich einfach als Stanzteil herstellen läßt.

Man könnte das zweite Verbindungsteil 23 auch als Keil bezeichnen.

Bevorzugt bestehen sowohl die beiden Verbindungsteile 18, 23 wie auch das Spannteil 24 aus Metall, insbesondere aus Stahlguß oder Sinterstahl. Ferner ist es anstelle der beispielsgemäßen separaten Ausgestaltung der beiden Verbindungsteile 18, 23 und des Spannteils 24 durchaus möglich, besagte Teile in einem einzigen oder in zwei Elementen zusammenzufassen. Im letztgenannten Falle könnte zum Beispiel das Spannteil 24 einstückig mit einem der beiden Verbindungsteile 18, 23 ausgebildet sein.

## Patentansprüche

1. Verbindungseinrichtung (17) für Profilteile, die zum Aufbau von Konstruktionen wie Tische, Regale, Gestelle oder dergleichen verwendbar sind, zur Verbindung eines ersten Profilteils (1) mit einem quer zu diesem verlaufenden, sich mit einer Stirnseite gegen eine Längsseite des ersten Profilteils (1) abstützenden zweiten Profilteil (2), wobei das erste Profilteil (1) an der dem zweiten Profilteil (2) zugewandten Längsseite eine sich in Längsrichtung erstreckende erste Verankerungsnut (3) aufweist, deren schlitzartige seitliche Längsöffnung von der Längsachse einer an dem zweiten Profilteil (2) vorgesehenen und an der dem ersten Profilteil (1) zugewandten Stirnseite offenen zweiten Verankerungsnut getroffen wird, wobei die Verbindungseinrichtung (17) ein erstes Verbindungsteil (18) aufweist, das unter Einnahme einer Verankerungsstellung so in der ersten Verankerungsnut (3) angeordnet werden kann, daß eine durch die Längsöffnung (5) hindurch erfolgende Entnahme aus der ersten Verankerungsnut (3) unmöglicn ist, daß die Verbindungseinrichtung (17) ein in der zweiten Verankerungsnut (4) anzuordnendes zweites Verbindungsteil (23) aufweist, und daß die Verbindungseinrichtung (17) ein Spannteil (24) aufweist, mit dem sich die beiden Verbindungsteile (18, 23) im wesentlichen in Richtung der Längsachse (16) der zweiten Verankerungsnut (4) aufeinander zu gerichtet miteinander verspannen lassen, wobei das zweite Verbindungsteil (23) bei entsprechender Verspannung durch das Spannteil (24) in der zweiten Verankerungsnut (4) verkantet und in der dann vorliegenden Verkantungsstellung in Längsrichtung (16) der zweiten Verankerungsnut (4) unverrückbar am zweiten Profilteil (2) festgelegt ist.

2. Verbindungseinrichtung nach Anspruch 1, dadurch gekennzeichnet, daß das erste Verbindungsteil (18) ein Nutenstein ist.

3. Verbindungseinrichtung nach Anspruch 1 oder 2, dadurch gekennzeichnet, daß das Spannteil (24) ein Gewindeteil (34) ist, das mit mindestens einem der beiden Verbindungsteile (18, 23) in Schraubverbindung steht.

4. Verbindungseinrichtung nach Anspruch 3, dadurch gekennzeichnet, daß das Gewindeteil eine Schraube (34) ist, die einen sich am zweiten Verbindungsteil (23) abstützenden Schraubenkopf (35) und einen mit dem Gewinde (39) des ersten Verbindungsteils (18) zusammenarbeitenden Gewindeabschnitt (38) aufweist, wobei der Schraubenkopf (35) zweckmäßigerweise eine Angriffspartie (48) für ein Schraubwerkzeug aufweist.

5. Verbindungseinrichtung nach einem der Ansprüche 1 bis 4, dadurch gekennzeichnet, daß das verkantbare zweite Verbindungsteil (23) eine sich in Verkantungsstellung im wesentlichen in Längsrichtung (16) der zweiten Verankerungsnut (4) erstreckende Durchgangsöffnung (33) für den Durchgriff des Spannteils (24) aufweist.

6. Verbindungseinrichtung nach einem der Ansprüche 1 bis 5, dadurch gekennzeichnet, daß das verkantbare zweite Verbindungsteil (23) in der zweiten Verankerungsnut (4) eine Lösestellung einnehmen kann, in der es zweckmäßigerweise in Längsrichtung (16) der zweiten Verankerungsnut (4) relativ zu dieser verlagerbar ist.

7. Verbindungseinrichtung nach Anspruch 6, dadurch gekennzeichnet, daß das zweite Verbindungsteil (23) beim Anziehen des Spannteils (24) aus der Lösestellung in die Verkantungsstellung verbracht wird.

8. Verbindungseinrichtung nach Anspruch 7 in Verbindung mit Anspruch 5, dadurch gekennzeichnet, daß die Durchmesser der Durchgangsöffnung (33) und des Spannteils (24) so aufeinander abgestimmt sind, daß sich das zweite Verbindungsteil (23) zum Verbringen zwischen der Lösestellung und der Verkantungsstellung um eine quer zur Längsachse (16) des Spannteils (24) verlaufende Achse bezüglich dem Spannteil (24) verkippen läßt.

9. Verbindungseinrichtung nach einem der Ansprüche 6 bis 8, dadurch gekennzeichnet, daß das zweite Verbindungsteil (23) in der Verkantungsstellung unter einem im Vergleich zur Lösestellung veränderten Neigungswinkel bezüglich der Längsachse (16) der zweiten Verankerungsnut (4) angeordnet ist.

10. Verbindungseinrichtung nach einem der Ansprüche 1 bis 9, dadurch gekennzeichnet, daß das zweite Verbindungsteil (23) eine Verkantungspartie (25) aufweist, die in der Verkantungsstellung mit einem der Längsöffnung (5) der zweiten Verankerungsnut (4) zugewandten Flächenabschnitt (26) der zweiten Verankerungsnut (4) zusammenarbeitet, und ferner mindestens eine der Verkantungspartie entgegengesetzte Abstützpartie (27), die in der Verkantungsstellung an einer in der zweiten Verankerungsnut (4) neben dem Nuthals (7) liegenden und dem Nutgrund zugewandten nutseitigen Abstützfläche (12) anliegt.

11. Verbindungseinrichtung nach Anspruch 10, dadurch gekennzeichnet, daß im Bereich der Verkantungspartie (25) an der dem ersten Verbindungsteil (18) abgewandten Seite des zweiten Verbindungsteils (23) eine insbesondere als Schrägfläche (43) ausgebildete geneigte Fläche vorgesehen ist, die zweckmäßigerweise zu einer Kante (40) ausläuft.

12. Verbindungseinrichtung nach einem der Ansprüche 1 bis 11, dadurch gekennzeichnet, daß das zweite Verbindungsteil (23) eine zumindest in der Verkantungsstellung in den Nuthals (7) der zweiten Verankerungsnut (4) eingreifende Stabilisierungspartie (44) aufweist, die mit den einander zugewandten Seitenflächen (46) des Nuthalses (7) zusammenarbeiten kann.

13. Verbindungseinrichtung nach einem der Ansprüche 1 bis 12, dadurch gekennzeichnet, daß das zweite Verbindungsteil (23) in der Verkantungsstellung in die Oberfläche (26) der zweiten Verankerungsnut (4) eingedrückt ist.

14. Verbindungseinrichtung nach einem der Ansprüche 1 bis 13, dadurch gekennzeichnet, daß das zweite Verbindungsteil (23) so ausgebildet ist, daß es sich über die Längsöffnung (5) der zweiten Verankerungsnut (4) in diese einsetzen läßt.

15. Verbindungseinrichtung nach einem der Ansprüche 1 bis 14, dadurch gekennzeichnet, daß ein zwischen den beiden Verbindungsteilen (18, 23) angeordnetes, insbesondere als Verdrehsicherungsteil wirkendes Zentrierteil (53) vorhanden ist, das gleichzeitig in die Nuthälse (7) beider Verankerungsnuten (3, 4) eingreift, und das zweckmäßigerweise mittels des Spannteils (25) lagefixiert ist.

## Claims

1. Connecting device (17) for sections suitable for the construction of structures such as tables, shelving, stands and the like, for connecting a first section (1) to a second section (2) extending at right angles thereto with an end face resting on a longitudinal side of the first section (1), the longitudinal side of the first section (1) facing the second section (2) being provided with a first anchoring groove (3) extending in the longitudinal direction, the slot-like lateral longitudinal opening of which is met by the longitudinal axis of a second anchoring groove provided on the second section (2) and open at the end face which faces the first section (1), wherein the connecting device (17) has a first connecting element (18) which, adopting an anchored position, may be so located in the first anchoring groove (3) that its removal from the first anchoring groove (3) through the slot-like longitudinal opening (5) is impossible, that the connecting element (17) has a second connecting element (23) locatable in the second anchoring groove (4), and that the connecting element (17) has a clamping element (24) by means of which the two connecting elements (18, 23) may be clamped together substantially aligned with one another in the direction of the longitudinal axis (16) of the second anchoring groove (4), wherein the second connecting element (23), while suitably clamped by the clamping element (24), is tilted in the second anchoring groove (4) and fixed immovably to the second section (2) in the tilted position which then exists in the longitudinal direction (16) of the second anchoring groove (4).

2. Connecting device according to claim 1, characterized in that the first connecting element (18) is a sliding block.

3. Connecting device according to claim 1 or 2, characterized in that the clamping element (24) is a threaded element (34) in screwed connection with at least one of the two connecting elements (18, 23).

4. Connecting device according to claim 3, characterized in that the threaded element is a screw (34), with a screw head (35) resting on the second connecting element (23) and a threaded section (38) working in conjunction with the thread (39) of the first connecting element (18), wherein the screw head (35) expediently has a contact section (48) for a tightening tool.

5. Connecting device according to any of claims 1 to 4, characterized in that the tiltable second connecting element (23) has a through hole (33) for the passage of the clamping element (24) and which in the tilted position extends essentially in the longitudinal direction (16) of the second anchoring groove (4).

6. Connecting device according to any of claims claims 1 to 5, characterized in that the tiltable second connecting element (23) can assume a release position in the second anchoring groove (4), into which it may expediently be shifted in the longitudinal direction (16) of the second anchoring groove (4) relative to the latter.

7. Connecting device according to claim 6, characterized in that, on tightening of the clamping element (24), the second connecting element (23) is moved from the release position into the tilted position.

8. Connecting device according to claim 7 in conjunction with claim 5, characterized in that the diameter of the through hole (33) and of the clamping element (24) are so matched to one another that the second connecting element (23) may be tilted around an axis running at right-angles to the longitudinal axis (16) relative to the clamping element (24), for movement between the release position and the tilted position.

9. Connecting device according to any of claims 6 to 8, characterized in that in the tilted position the second connecting element (23) is arranged at a different angle of tilt to that of the release position, relative to the longitudinal axis (16) of the second anchoring groove (4) .

10. Connecting device according to any of claims 1 to 9, characterized in that the second connecting element (23) has a tilting section (25) which in the tilted position works in conjunction with a surface section (26) of the second anchoring groove (4) opposite the longitudinal opening (5) of the second anchoring groove (4), and also has one or more support sections (27) opposite the tilting section and resting in the tilted position on a groove-side support surface (12) lying in the second anchoring groove (4) next to the groove neck (7) and facing the groove base.

11. Connecting device according to claim 10, characterized in that there is provided in the area of the tilting section (25), on that side of the second connecting element (23) opposite the first connecting element (18), an inclined surface in particular in the form of a sloping surface (42) and expediently running out to an edge.

12. Connecting device according to any of claims 1 to 11, characterized in that, at least in the tilted position, the second connecting element (23) has a stabilizing section (44) engaging in the groove neck (7) of the second anchoring groove (4), and which is able to work in conjunction with the opposing side faces (46) of the groove neck (7).

13. Connecting device according to any of claims 1 to 12, characterized in that, in the tilted position, the second connecting element (23) is pressed into the surface (26) of the second anchoring groove (4).

14. Connecting device according to any of claims 1 to 13, characterized in that the second connecting element (23) is so designed that it may be inserted into the second anchoring groove (4) via the longitudinal opening (5).

15. Connecting device according to any of claims 1 to 14, characterized in that there is a centring element (53) located between the two connecting elements (18, 23) and acting in particular as an anti-twist device, which simultaneously engages in the groove necks (7) of both anchoring grooves (3, 4) and is expediently fixed in position by means of the clamping element (25).

## Revendications

1. Dispositif de liaison (17) pour parties profilées, qui sont susceptibles d'être utilisées pour la réalisation de constructions telles que des tables, des étagères, des échafaudages ou similaires, destiné à relier une première partie profilée (1) avec une deuxième partie profilée (2), s'étendant perpendiculairement à celle-ci, dont une face frontale s'appuie contre un côté longitudinal de la première partie profilée (1), la première partie profilée (1) présentant, sur le côté longitudinal orienté en direction de la deuxième partie profilée (2), une première rainure d'ancrage (3) s'étendant dans le sens longitudinal, dont l'ouverture longitudinale latérale, du type fente, est touchée par l'axe longitudinal d'une deuxième rainure d'ancrage prévue sur la deuxième partie profilée (2) et ouverte sur la face frontale orientée en direction de la première partie profilée (1), le dispositif de liaison (17) présentant une première partie de liaison (18) pouvant être placée, en adoptant une position d'ancrage, dans la première rainure d'ancrage (3), de telle sorte qu'un retrait, pratiqué à travers l'ouverture longitudinale (5), hors de la première rainure d'ancrage (3), soit impossible, le dispositif de liaison (17) présentant une deuxième partie de liaison (23) destinée à venir se placer dans la deuxième rainure d'ancrage (4), et le dispositif de liaison (17) présentant une partie de serrage (24), au moyen de laquelle les deux parties de liaison (18, 23) peuvent être serrées en direction l'une de l'autre, sensiblement dans le sens de l'axe longitudinal (16) de la deuxième rainure d'ancrage (4), la deuxième partie de liaison (23), lorsqu'il y a serrage correspondant par la partie de serrage (24), étant coincée dans la deuxième rainure d'ancrage (4) et, dans la position de coincement qui est alors donnée, étant fixée sans possibilité de déplacement sur la deuxième partie profilée (2), dans le sens longitudinal (16) de la deuxième rainure d'ancrage (4).

2. Dispositif de liaison selon la revendication 1, caractérisé en ce que la première partie de liaison (18) est un coulisseau.

3. Dispositif de liaison selon la revendication 1 ou 2, caractérisé en ce que la partie de serrage (24) est une partie filetée (34), qui est vissée avec au moins l'une des deux parties de liaison (18, 23).

4. Dispositif de liaison selon la revendication 3, caractérisé en ce que la partie filetée est une vis (34), qui présente une tête de vis (35), s'appuyant sur la deuxième partie de liaison (23), et un tronçon fileté (38) coopérant avec le filetage (39) de la première partie de liaison (18), la tête de vis (35) présentant avantageusement une partie d'application pour un outil pour vis.

5. Dispositif de liaison selon l'une des revendications 1 à 4, caractérisé en ce que la deuxième partie de liaison (23), susceptible d'être coincée, présente une ouverture traversante (33), destinée à la pénétration de la partie de serrage (24), s'étendant, en position de coincement, sensiblement dans la direction longitudinale (16) de la deuxième rainure d'ancrage (4).

6. Dispositif de liaison selon l'une des revendications 1 à 5, caractérisé en ce que la deuxième partie de liaison (23), susceptible d'être coincée, peut adopter une position détachée, dans la deuxième rainure d'ancrage (4), dans laquelle elle est avantageusement susceptible d'être déplacée, dans la direction longitudinale (16) de la deuxième rainure d'ancrage (4), par rapport à celle-ci.

7. Dispositif de liaison selon la revendication 6, caractérisé en ce que la deuxième partie de liaison (23), lorsque l'on serre la partie de serrage (24), peut être amenée à passer de la position détachée à la position de coincement.

8. Dispositif de liaison selon la revendication 7, en combinaison avec la revendication 5, caractérisé en ce que les diamètres de l'ouverture traversante (33) et de la partie de serrage (24) sont ajustés l'un en fonction de l'autre de telle sorte que la deuxième partie de liaison (23), pour qu'elle passe entre la position détachée et la position de coincement, est susceptible de basculer, par rapport à la partie de serrage (24), autour d'un axe perpendiculaire à l'axe longitudinal (16) de la partie de serrage (24).

9. Dispositif de liaison selon l'une des revendications 6 à 8, caractérisé en ce que la deuxième partie de liaison (23), en position de coincement, est placée avec un angle d'inclinaison, par rapport à l'axe longitudinal (16) de la deuxième rainure d'ancrage (4), qui est différent de celui qu'elle adopte dans la position détachée.

10. Dispositif de liaison selon l'une des revendications 1 à 9, caractérisé en ce que la deuxième partie de liaison (23) présente une partie de coincement (25) qui, en position de coincement, coopère avec une portion de surface (26), orientée en direction de l'ouverture longitudinale (5) de la deuxième rainure d'ancrage (4), de la deuxième rainure d'ancrage (4) et, en outre, au moins une partie d'appui (27), opposée à la partie de coincement, qui, en position de coincement, repose contre une surface d'appui (12), du côté de la rainure, située dans la deuxième rainure d'ancrage (4) à côté de la gorge de rainure (7) et orientée en direction du fond de la rainure.

11. Dispositif de liaison selon la revendication 10, caractérisé en ce qu'est prévue, dans la zone de la partie de coincement (25), du côté de la deuxième partie de liaison (23) qui est opposé à la première partie de liaison (18), une surface inclinée conformée, en particulier, en partie oblique (43), qui se termine avantageusement en arête (40).

12. Dispositif de liaison selon l'une des revendications 1 à 11, caractérisé en ce que la deuxième partie de liaison (23) présente une partie stabilisatrice (44) pénétrant, au moins en position de coincement, dans la gorge (7) de la deuxième rainure d'ancrage (4), partie stabilisatrice qui peut coopérer avec les faces latérales (46), orientées l'une vers l'autre, de la gorge de rainure (7).

13. Dispositif de liaison selon l'une des revendications 1 à 12, caractérisé en ce que la deuxième partie de liaison (23), en position de coincement, est enfoncée dans la surface (26) de la deuxième rainure d'ancrage (4).

14. Dispositif de liaison selon l'une des revendications 1 à 13, caractérisé en ce que la deuxième partie de liaison (23) est conformée de telle sorte qu'elle puisse être insérée, à travers l'ouverture longitudinale (5) de la deuxième rainure d'ancrage (4), dans celle-ci.

15. Dispositif de liaison selon l'une des revendications 1 à 14, caractérisé en ce qu'est prévue une partie de centrage (53) située entre les deux parties de liaison (18, 23), assurant en particulier un blocage en rotation, qui pénètre simultanément dans les gorges (7) des deux rainures d'ancrage (3, 4), et qui est avantageusement fixée en place au moyen de la partie de serrage (25).
